**Europäisches Patentamt**

**European Patent Office**

**Office européen des brevets**

(11) Publication number: **0 187 010**
**B1**

## EUROPEAN PATENT SPECIFICATION

(45) Date of publication of patent specification: **27.06.90**

(21) Application number: **85309146.0**

(22) Date of filing: **16.12.85**

(51) Int. Cl.⁵: **F 16 L 31/00,** F 16 L 41/00

(54) Improvements in or relating to branched hose.

(30) Priority: **15.12.84 GB 8431740**
**07.11.85 GB 8527484**

(43) Date of publication of application:
**09.07.86 Bulletin 86/28**

(45) Publication of the grant of the patent:
**27.06.90 Bulletin 90/26**

(84) Designated Contracting States:
**DE FR IT SE**

(56) References cited:
**EP-A-0 088 571**
**EP-A-0 132 419**
**FR-A-2 518 927**
**GB-A-1 300 518**
**GB-A-2 138 527**

(73) Proprietor: **DUNLOP LIMITED**
**Silvertown House Vincent Square**
**London SW1P 2PL (GB)**

(72) Inventor: **Bunyaga, Semambo**
**91 Evington Road**
**Leicester (GB)**

(74) Representative: **Moore, John Hamilton et al**
**Dunlop Limited Group Patent Department P.O.**
**Box 504**
**Erdington Birmingham B24 9QH (GB)**

Courier Press, Leamington Spa, England.

## Description

This invention is directed to improvements in or relating to branched hose, i.e. hose comprising a main pipe having one or more branch pipes connected thereto, and to a method of manufacture of branched hose.

Branched hose frequently is used in vehicle cooling systems to connect the main fluid circuit including the radiator and engine cylinder block to secondary fluid circuits such as the heating system. Usually the hose is flexible and made of rubber or other elastomeric material having an embedded textile reinforcement to withstand the operating conditions, typically relatively high fluid temperatures and pressures.

The connection between the flexible main pipe and the branch pipe conventionally is achieved by cutting a hole in the wall of the main pipe, inserting the end of the branch pipe into the hole and securing the two together by means of a moulding operation.

This method has several disadvantages. Thus the end of the branch pipe is exposed to the working fluid which could possibly enter and work its way progressively along any embedded reinforcement to result in delamination of the branch pipe and ultimately failure of the hose. The end of the branch pipe usually protrudes into the bore of the main pipe and consequently thereby restricts the flow of the working fluid through the main pipe.

GB—A—2138527 describes one attempt to mitigate the aforediscussed disadvantages and teaches that use may be made of a rigid connection device in the form of a tubular body having at one end a curved external flange the curvature of which matches the curvature of the bore of the main pipe. The tubular body fits within the bore of the branch pipe and extends through an opening in the wall of the main pipe such that the flange conforms to and contacts the bore of the main pipe around said opening. In this arrangement the branch pipe is shown as abutting the outer surface of the main pipe.

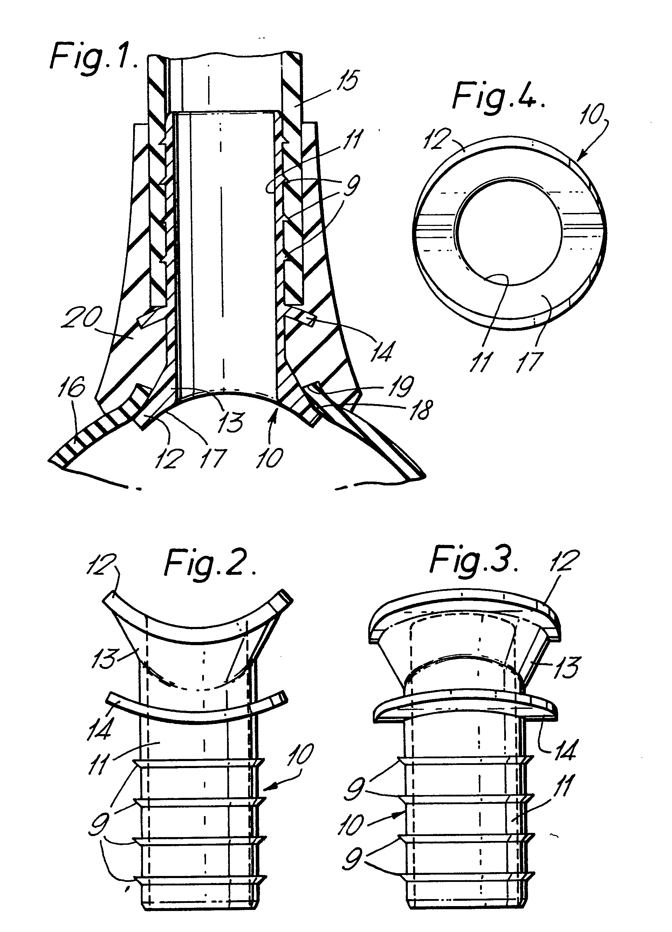

EP—A—0132419 published on 30 January 1985 and having a priority of 13 July 1983 teaches that the tubular body of a rigid connection device may be provided with an abutment in the form of an intermediate annular flange of disc-like form and arranged to lie externally of the main pipe. In contrast to GB—A—2138527, in the construction described with reference to Figure 1 of EP—A—1032419 the entire end face of the branch pipe uniformly abuts a confronting surface of the intermediate flange.

In accordance with the present invention there is provided a branched hose and a method for the manufacture of a branched hose in which a space is provided between the end of a branch hose and an abutment, such as an intermediate flange, of a rigid connection device and a band of material is arranged to extend into that space and serve to interconnect the main and branch pipes.

The abutment, which preferably is of a substantially annular form is to serve to prevent the connection device from falling into the main pipe during assembly and therefore it is required to extend outwardly from the tubular body so as to be larger than the opening in the main pipe. It is envisaged, however, that normally it need not extend outwardly from the tubular body as far as the flange extends from the tubular body.

Preferably a part of the end face of the branch pipe seats against the abutment which may have a non-planar surface for confronting the end of the branch pipe. The abutment may be contoured so that the surface facing the main pipe has a curvature similar to that of the main pipe. In the branched hose the confronting ends of the main and branch pipes are separated by the abutment and the risk of working fluid wicking into the branch pipe is thereby minimised. Usually, but not necessarily, the abutment will be of a kind which extends continuously around the tubular body but in an alternative it may be of a form which does not extend continuously around the tubular body. Preferably the mouldable material is caused to fully occupy the spaces between confronting edge surfaces of each of the main and branch pipes at which pipe reinforcement is exposed.

The moulded material may be elastomeric and preferably extends around the branch pipe over a length thereof substantially equal to, but preferably less than, that distance which the tubular body portion of the connection device projects into the branch pipe. The band may be arranged also to extend completely around the main pipe but for a compact construction preferably does not extend completely around said main pipe. In one preferred construction the band of material extends around no more than approximately half the circumference of the main pipe as considered in cross-section of the main pipe in the region of the opening therein.

The moulded material may be a polymeric material, preferably an elastomeric material, of a kind having embedded therein a reinforcement of a plurality of staple fibres whereby the band is rendered substantially inelastic. The reinforcement fibres may be fibres of a textile material such as nylon, polyester, cotton, rayon or cellulose, but fibres of other materials such as Kevlar (registered Trade Mark) or glass may be used. The individual fibres may have a relatively short length, for example in the order of 10 mm or less, and preferably are treated with an appropriate adhesion promoting agent to facilitate adhesion to the embedding polymeric material. Preferably the fibres have a length in the range 3 to 5 mm and a diameter in the range 20 to 30 microns. The fibres may be generally randomly orientated within the polymeric material or may be preferentially orientated, for example in a circumferential direction of a surrounded portion of the branch hose.

Moulding of the mouldable material preferably is undertaken in a manner which causes the material to fully penetrate and occupy any space between the main hose and abutment.

The flexible main pipe typically will be of elastomeric material and the branch pipe typically flexible and preferably also of elastomeric material. The main and/or branch pipe may include an embedded reinforcement which may comprise one or more layers of textile material, for example a knitted rayon or polyester sleeve or a ply woven fabric. Alternatively the reinforcement may comprise discontinuous fibres which may be randomly distributed or orientated in a specific direction, e.g. axially, radially, or circumferentially as described in GB—A—2038437.

Preferably the connection device is moulded in one piece and preferably is formed from settable plastics material, for example nylon 66 (coolant resistant type), although other materials such as thermoplastics plastics may be used provided that they are resistant to the conditions pertaining to the use of the product. For example the material should be resistant to solvent attack when used for automotive applications.

Preferably the connection device is sized so that the diameter of the portion of the tubular body between the flange and abutment is the same as that of the opening in the main pipe which is therefore not distorted in use, i.e. about the same size as it would be in the absence of the connection device. The size of the flange will be such that it may be inserted through the opening in the main pipe by distorting the opening.

The flange may be angled relative to the longitudinal axis of the body to provide any desired joint angle between the main and branch pipes.

Preferably the external surface of the body is provided with means, for example one or more annular ribs, to grip the bore of the branch pipe. Additionally or alternatively an adhesive may secure or assist in securing the tubular body in position relative to the branch pipe. Optionally adhesive may be provided to secure the flange of the connection device to the bore of the main pipe.

One embodiment of the invention will now be described, by way of example, with reference to the accompanying diagrammatic drawings wherein:

Figure 1 shows in cross-section part of a branched elastomeric hose according to the present invention;

Figure 2 is a side view of a connection device for use in a branched elastomeric hose according to the present invention;

Figure 3 is another side view of the connection device shown in Figure 2 in a direction perpendicular to that of the view of Figure 2, and

Figure 4 is a plan view of the connection device shown in Figures 2 and 3.

Referring to Figures 1 to 4, a connection device 10 moulded from nylon 66 (coolant resistant type) comprises a cylindrical hollow body 11 having an annular outwardly extending flange 12 at one end. A thickened annular region 13 (see Figure 1) lies between the distal end of the flange and the tubular body 11.

In a region generally remote from the flange the tubular body 11 is provided with four external annular ribs 9 of a serrated configuration arranged for retention of a branch pipe 15 force fitted over the tubular body.

Positioned between the annular ribs 9 and the thickened annular region 13 is an annular abutment 14 which is spaced from the outwardly extending flange 12 by a distance greater than the wall thickness of a main pipe 16 so that it is not in contact with the main pipe when the bore thereof is contacted by the flange 12. The annular abutment 14 is contoured so that the surface of the abutment facing the flange 12 matches the curvature of the outer surface of the main pipe 16.

The external diameter of the annular abutment 14 is selected so as to be sufficient both to provide an abutment against which the branch hose 15 may be force fitted over the serrations 9 and also sufficient to ensure that the abutment 14 and portion of the tubular body remote from the flange 12 will not enter the bore of the main pipe during assembly.

The annular flange 12 has a generally inwardly facing surface 17 the curvature of which conforms generally to the curvature of the bore of the main pipe 16. However, the other, generally outwardly facing surface 18, of the flange which faces generally towards the annular abutment 14 preferably is angled such that the angle between the surface 18 and the longitudinal axis of the tubular body is less than the angle between the inwardly facing surface 17 and the longitudinal axis for a reason which is explained below. A flange of this type is described in the specification of our copending European Patent Application No. 85309145.2 (EP—A—185535) and said application includes claims embracing a branched hose and method of manufacture of a branched hose having a connection device with a flange of this type.

To manufacture the branched hose assembly shown in Figure 1 an opening 19 is formed in the wall of the main pipe, the diameter of the opening being substantially the same as that of the external diameter of that portion of the tubular body between the abutment 14 and flange 12. The flange 12 is inserted through the opening 19 by deforming the wall of the main pipe 16. A branch pipe 15 is then pushed onto the body 11 until the end of the pipe abuts the annular abutment 14. During this operation the annular abutment serves to resist any tendency for the connection device to fall into the main pipe 16.

Subsequent to fitting of the branch hose to the tubular body 11 the connection device is pulled slightly away from the main hose such that the outer surface 18 of the flange 12 contacts the inner surface of the main pipe and causes distortion of the marginal portion of the opening 19. In consequence the cut edge of the main pipe defining the opening is slightly upturned to face in general towards the abutment 14. With the abutment 14 maintained slightly spaced from the main pipe and the main pipe in contact with said surface 18 a band 20 of mouldable uncured rubber is positioned around the joint and subject to a moulding operation whereby it is caused to fill all spaces between the annular abutment 14 and the main and branch pipes and subsequently is cured thereby to interconnect the main and branch pipes and form a fluid seal therebetween.

The use of an annular abutment 14 a surface of which conforms generally to the curvature of the outer surface of the main pipe results in the assembled condition in a substantially uniform spacing between the abutment and main pipe, and thus subsequent to application of the mouldable material 20 there is a uniform filling of that mouldable material between the main pipe and abutment.

By virtue of the use of a connection device of a kind having an abutment the resultant branch hose assembly of the invention has a number of advantages. Thus, the abutment prevents the connection device falling into a main pipe, and the presence of the moulded material between the abutment and end face of the branch pipe assists in ensuring that the branch pipe is protected from attack by working fluid. A further advantage which may be attained is that of increased burst pressure for the joint.

**Claims**

1. A branched hose comprising a flexible main pipe (16) having an opening (19) in the wall thereof, a branch pipe (15) the bore of which is in communication with the bore of the main pipe (16) via said opening, a substantially rigid connection device (10) located in the bore of the main and branch pipes and comprising a tubular body (11) having at least in part an external diameter which locates in the bore of the branch pipe, said tubular body (11) having integral therewith and at one thereof a flange (12) which extends outwardly from the bore of the tubular body, an abutment (14) formed integral with the tubular body (11) and axially spaced from the flange (12), the abutment (14) being dimensioned normally to resist entry through the opening (19) of the main pipe (16) during assembly of the connection device into the main pipe (16), said connection device being positioned in said main and branch pipes with the tubular body (11) extending through said opening (19) and secured in position relative to the branch pipe with the flange (12) in contact with the surface of the bore of the main pipe (16) surrounding said opening and the abutment (14) disposed external of the main pipe, and externally of the connection device a band (20) of material moulded to interconnect the pipes and form a fluid seal therebetween, characterised in that the abutment (14) is disposed between the main pipe and branch pipe (15) and at least a part of the end face of the branch pipe (15) is spaced from a confronting surface of the abutment (14) and that said band (20) of moulded material extends into said space.

2. A branched hose according to claim 1 characterised in that said confronting surface of the abutment (14) is non-planar.

3. A branched hose according to claim 1 or claim 2 characterised in that the abutment (14) is spaced from the main pipe (16) and said band (20) of moulded material extends into said space.

4. A branched hose according to claim 3 characterised in that the band (20) of moulded material contacts that edge surface of the main pipe (16) which defines the opening in the wall thereof.

5. A branched hose according to any one of the preceding claims characterised in that the branch pipe (15) abuts against the abutment (14).

6. A branched hose according to any one of the preceding claims characterised in that the abutment (14) is of an annular form.

7. A branched hose according to any one of claims 1 to 5 characterised in that the abutment is of a form which does not extend continuously around the tubular body.

8. A branched hose according to any one of the preceding claims characterised in that the abutment (14) extends outwardly from the tubular body (11) less than the flange (12) extends outwardly from the tubular body.

9. A branched hose according to any one of the preceding claims characterised in that the moulded material (20) extends around the branch pipe (15) over a length thereof substantially equal to the length for which the tubular body (11) projects into the branch pipe.

10. A branched hose according to any one of the preceding claims characterised in that the moulded material (20) comprises a fibre reinforced polymeric material.

11. A branched hose according to any one of the preceding claims characterised in that an adhesive secures or assists in securing the tubular body (11) in position relative to the branch pipe (15).

12. A branched hose according to any one of the preceding claims characterised in that a surface of the abutment (14) facing the main pipe (16) has a curvature similar to the outer surface of said pipe.

13. A method for the manufacture of a branched hose comprising:—

providing a flexible main pipe (16) having an opening (19) in the wall thereof;

providing a substantially rigid connection device (10) comprising a tubular body (11) having at least in part an external diameter for location in the bore of a branch pipe (15), said tubular body (11) having integral therewith and at one end thereof a flange (12) which extends outwardly from the bore of the tubular body (11) and an abutment (14) also formed integral with the tubular body, and axially spaced from the flange (12), the abutment (14) being dimensioned normally to resist entry through the opening (19) of the main pipe (16) during insertion of the connection device into the main pipe;

inserting the connection device (10) into the main pipe (16) such that the wall of the main pipe lies between the flange (12) and abutment (14) with the flange positioned within the main pipe for contact with the bore thereof;

attaching a branch pipe (15) to the tubular body (11);

providing mouldable material externally of the connection device, and

moulding said mouldable material to form a band (20) which interconnects the pipes and forms a fluid seal therebetween,

characterised in that the branch pipe (15) is attached to surround only that part of the connection device which lies to that side of the abutment remote from the flange, and is arranged with at least a part of the end face thereof spaced from a confronting surface of the abutment (14) and that said mouldable material is caused to fully penetrate and occupy the space between the branch pipe (15) and the abutment (11).

14. A method according to claim 13 characterised in that the abutment is spaced at least in part from the main pipe (16) and said mouldable material is moulded to fully penetrate and occupy the space between the main pipe (16) and the abutment (14).

**Patentansprüche**

1. Schlauchabzweigung mit einem flexiblen Hauptrohr (16), das in seiner Wand eine Öffnung (19) aufweist, einem Zweigrohr (15), dessen Höhlung mit der Höhlung des Hauptrohres (16) über die genannte Öffnung in Verbindung steht, einer im wesentlichen starren Verbindungseinrichtung (10), die in der Höhlung des Haupt- und des Zweigrohres angeordnet ist und einen rohrförmigen Körper (11) umfaßt, der wenigstens teilweise einen Außendurchmesser hat, der in die Höhlung des Zweigrohres paßt, wobei der rohrförmige Körper (11) in einem Stück und an einem Ende einen Flansch (12), der von der Höhlung des rohrförmigen Körpers nach außen verläuft, und einen Anschlag (14) aufweist, der in einem Stück mit dem rohrförmigen Körper (11) und axial im Abstand vom Flansch (12) ausgebildet ist, wobei der Anschlag (14) normalerweise so bemessen ist, daß er dem Eintritt durch die Öffnung (19) des Hauptrohres (16) während des Einbaus der Verbindungseinrichtung in das Hauptrohr (16) widersteht, und wobei die Verbindungseinrichtung im Haupt- und Zweigrohr so angeordnet ist, daß der rohrförmige Körper (11) sich durch die Öffnung (19) erstreckt und in einer Lage relativ zum Zweigrohr so festgelegt ist, daß der Flansch (12) mit der Oberfläche der Höhlung des Hauptrohres (16) in Kontakt steht, die die Öffnung umgibt, und der Anschlag (14) außen vom Hauptrohr angeordnet ist, und mit einem außerhalb der Verbindungseinrichtung angeordneten Band (20) aus einem Material, das so geformt ist, daß es die Rohre verbindet und eine Fluiddichtung dazwischen bildet, dadurch gekennzeichnet, daß der Anschlag (14) zwischen dem Hauptrohr und dem Zweigrohr (15) angeordnet ist und wenigstens ein Teil der Stirnfläche der Zweigleitung (15) im Abstand von der gegenüberliegenden Außenfläche des Anschlages (14) verläuft und das Band (20) aus dem geformten Material sich in diesen Zwischenraum erstreckt.

2. Schlauchabzweigung nach Anspruch 1, dadurch gekennzeichnet, daß die gegenüberliegende Außenfläche des Anschlags (14) nicht eben ist.

3. Schlauchabzweigung nach Anspruch 1 oder 2, dadurch gekennzeichnet, daß der Anschlag (14) vom Hauptrohr (16) beabstandet ist und das Band (20) aus dem Formmaterial sich in diesen Zwischenraum erstreckt.

4. Schlauchabzweigung nach Anspruch 3, dadurch gekennzeichnet, daß das Band (20) aus dem Formmaterial mit der Randfläche des Hauptrohres (16) in Berührung steht, die die Öffnung in seiner Wand begrenzt.

5. Schlauchabzweigung nach einem der vorhergehenden Ansprüche, dadurch gekennzeichnet, daß das Zweigrohr (15) am Anschlag (14) anliegt.

6. Schlauchabzweigung nach einem der vorhergehenden Ansprüche, dadurch gekennzeichnet, daß der Anschlag (14) eine Ringform hat.

7. Schlauchabzweigung nach einem der Ansprüche 1 bis 5, dadurch gekennzeichnet, daß der Anschlag eine Form hat, die sich nicht ununterbrochen um den rohrförmigen Körper erstreckt.

8. Schlauchabzweigung nach einem der vorhergehenden Ansprüche, dadurch gekennzeichnet, daß sich der Anschlag (14) vom rohrförmigen Körper (11) in einem Maße nach außen erstreckt, das kleiner als das Maß ist, in dem sich der Flansch (12) vom rohrförmigen Körper nach außen erstreckt.

9. Schlauchabzweigung nach einem der vorhergehenden Ansprüche, dadurch gekennzeichnet, daß das Formmaterial (20) sich um das Zweigrohr (15) über eine Länge erstreckt, die im wesentlichen gleich der Länge ist, um die der rohrförmige Körper (11) in das Zweigrohr vorsteht.

10. Schlauchabzweigung nach einem der vorhergehenden Ansprüche, dadurch gekennzeichnet, daß das Formmaterial (20) ein faserverstärktes polymeres Material umfaßt.

11. Schlauchabzweigung nach einem der vorhergehenden Ansprüche, dadurch gekennzeichnet, daß ein Klebemittel den rohrförmigen Körper (11) in seiner Lage relativ zum Zweigrohr (15) festlegt oder dessen Festlegung unterstützt.

12. Schlauchabzweigung nach einem der vorhergehenden Ansprüche, dadurch gekennzeichnet, daß eine Außenfläche des Anschlages (14), die dem Hauptrohr (16) zugewandt ist, eine Krümmung hat, die ähnlich der Außenfläche des Rohres ist.

13. Verfahren zum Herstellen einer Schlauchabzweigung, bei dem ein flexibles Hauptrohr (16) mit einer Öffnung (19) in seiner Wand vorgesehen wird, eine im wesentlichen starre Verbindungseinrichtung (10) vorgesehen wird, die einen rohrförmigen Körper (11) umfaßt, der wenigstens teilweise einen Außendurchmesser zum Anordnen in der Höhlung eines Zweigrohres (15) aufweist, wobei der rohrförmige Körper (11) in einem Stück damit und an seinem Ende einen Flansch (12), der von der Höhlung des rohrförmigen Körpers (11) nach außen verläuft, und einen Anschlag (14) aufweist, der gleichfalls in einem Stück mit dem rohrförmigen Körper und axial im Abstand vom Flansch (12) ausgebildet ist, und der Anschlag (14) normalerweise so bemessen ist, daß er derm Eintritt durch die Öffnung (19) des Hauptrohres (16) beim Einsetzen der Verbindungseinrichtung in das Hauptrohr widersteht, die Verbindungseinrichtung in das Hauptrohr (16) so eingesetzt wird, daß die Wand des Hauptrohres zwischen dem Flansch (12) und dem Anschlag (14) liegt, wobei der Flansch im Hauptrohr im Kontakt mit dessen Höhlung angeordnet ist, ein Zweigrohr (15) am rohrförmigen Körper (11) angebracht wird, ein formbares Material außen von der Verbindungseinrichtung vorgesehen wird und das formbare Material so geformt wird, daß es ein Band (20) bildet, das die Rohre verbindet und dazwischen eine Fluiddichtung bildet, dadurch gekennzeichnet, daß das Zweigrohr (15) so angebracht wird, daß es nur den Teil der Verbindungseinrichtung umgibt, der auf der vom Flansch entfernten Seite des Anschlages liegt, und so angeordnet wird, daß wenigstens ein Teil seiner Stirnfläche im Abstand von der gegenüberliegenden Fläche des Anschlages (14) liegt, und daß das formbare Material dazu gebracht wird, vollständig in den Zwischenraum zwischen dem Zweigrohr (15) und dem Anschlag (14) einzudringen und diesen Zwischenraum einzunehmen.

14. Verfahren nach Anspruch 13, dadurch gekennzeichnet, daß der Anschlag wenigstens teilweise vom Hauptrohr (16) beabstandet ist und das formbare Material so geformt wird, daß es vollständig in den Zwischenraum zwischen dem Hauptrohr (16) und dem Anschlag (14) eindringt und diesen Zwischenraum einnimmt.

**Revendications**

1. Pièce d'embranchement de tuyauterie comprenant un tuyau principal souple (16) présentant une ouverture (19) dans sa paroi, un tuyau de branchement (15) dont l'alésage communique avec l'alésage du tuyau principal (16) à travers cette ouverture, un dispositif de raccordement (10) sensiblement rigide disposé dans l'alésage des tuyaux principal et de branchement et comprenant un corps tubulaire (11) possédant en partie au moins un diamètre extérieur permettant le logement dans l'alésage du tuyau de branchement, le corps tubulaire (11) portant à l'une de ses extrémités un collet (12) qui est d'un seul tenant avec lui et fait saillie vers l'extérieur par rapport à l'alésage du corps tubulaire, une butée (14) formée d'un seul tenant avec le corps tubulaire (11) et axialement espacée du collet (12), la butée (14) étant dimensionnée pour, normalement, résister à l'entrée dans le tuyau principal (16) à travers l'ouverture (19) pendant la mise en place du dispositif de raccordement dans le tuyau principal (16), le dispositif de raccordement étant positionné dans les tuyaux principal et de branchement de manière que le corps tubulaire (11) s'étende à travers l'ouverture (19) et soit fixé en place par rapport au tuyau de branchement, avec le collet (12) en contact avec la surface de l'alésage du tuyau principal (16) entourant l'ouverture et avec la butée (14) disposée à l'extérieur du tuyau principal, ainsi que, à l'extérieur du dispositif de raccordement, une bande (20) de matériau moulé de manière qu'il relie ensemble les tuyaux et forme un joint étanche au fluide entre eux, caractérisée en ce que la butée (14) est disposée entre le tuyau principal et le tuyau de branchement (15) et au moins une partie de la face d'extrémité du tuyau de branchement (15) est espacée d'une surface de la butée (14) lui faisant face, et que la bande (20) de matériau moulé s'étend dans l'intervalle ainsi formé.

2. Pièce d'embranchement selon la revendication 1, caractérisée en ce que ladite surface de la butée (14) n'est pas plane.

3. Pièce d'embranchement selon la revendication 1 ou 2, caractérisée en ce que la butée (14) est espacée du tuyau principal (16) et la bande (20) de matériau moulé s'étend dans l'intervalle ainsi formé.

4. Pièce d'embranchement selon la revendication 3, caractérisée en ce que la bande (20) de matériau moulé est au contact de la surface de bord du tuyau principal (16) qui définit l'ouverture dans la paroi de ce tuyau.

5. Pièce d'embranchement selon l'une quelconque des revendications précédentes, caractérisée en ce que le tuyau de branchement (15) est appliqué contre la butée (14).

6. Pièce d'embranchement selon l'une quelconque des revendications précédentes, caractérisée en ce que la butée (14) possède une forme annulaire.

7. Pièce d'embranchement selon l'une quelconque des revendications 1 à 5, caractérisée en ce que la butée possède une forme qui ne s'étend pas de façon continue autour du corps tubulaire.

8. Pièce d'embranchement selon l'une quelconque des revendications précédentes, caractérisée en ce que la butée (14) s'étend vers l'extérieur, à partir du corps tubulaire (11), dans une moindre mesure que le collet (12) ne s'étend vers l'extérieur à partir du corps tubulaire.

9. Pièce d'embranchement selon l'une quelconque des revendications précédentes, caractérisée en ce que le matériau moulé (20) s'étend autour du tuyau de branchement (15) sur une longueur de ce tuyau qui est sensiblement égale à la longueur par laquelle le corps tubulaire (11) pénètre dans le tuyau de branchement.

10. Pièce d'embranchement selon l'une quelconque des revendications précédentes, caractérisée en ce que le matériau moulé (20) est un polymère armé de fibres.

11. Pièce d'embranchement selon l'une quelconque des revendications précédentes, caractérisée en ce que l'adhésif fixe ou contribue à fixer le corps tubulaire (11) en place par rapport au tuyau de branchement (15).

12. Pièce d'embranchement selon l'une quelconque des revendications précédentes, caractérisée en ce qu'une surface de la butée (14) faisant face au tuyau principal (16) possède une courbure semblable à celle de la surface externe de ce tuyau.

13. Procédé pour fabriquer une pièce d'embranchement de tuyauterie, comprenant:

la mise à disposition d'un tuyau principal souple (16) présentant une ouverture (19) dans sa paroi;

la mise à disposition d'un dispositif de raccordement (10) sensiblement rigide, comprenant un corps tubulaire (11) possédant en partie au moins un diamètre extérieur permettant le logement dans l'alésage d'un tuyau de branchement (15), le corps tubulaire (11) portant à l'une de ses extrémités un collet (12) qui est d'un seul tenant avec lui et s'étend vers l'extérieur à partir de l'alésage du corps tubulaire (11), de même qu'une butée (14) qui est également d'un seul tenant avec le corps tubulaire et est axialement espacée du collet (12), la butée (14) étant dimensionnée pour, normalement, résister à l'entrée dans le tuyau principal (16) à travers l'ouverture (19) pendant l'insertion du dispositif de raccordement dans le tuyau principal;

l'insertion du dispositif de raccordement (10) dans le tuyau principal (16), de manière que la paroi du tuyau principal soit située entre le collet (12) et la butée (14) et que le collet soit disposé à l'intérieur du tuyau principal et en contact avec l'alésage de ce tuyau; l'attache d'un tuyau de branchement (15) au corps tubulaire (11);

la disposition d'un matériau moulable à l'extérieur du dispositif de raccordement; et

le moulage de ce matériau pour former une bande (20) qui relie ensemble les tuyaux et forme un joint étanche au fluide entre eux,

caractérisé en ce que le tuyau de branchement (15) est attaché de manière qu'il entoure seulement la partie du dispositif de raccordement située du côté de la butée qui est éloigné du collet et le tuyau de branchement est agencé de manière qu'au moins une partie de sa face d'extrémité soit espacée d'une surface de la butée (14) lui faisant face, et que le matériau moulable est amené à pénétrer et occuper complètement l'intervalle ainsi formé entre le tuyau de branchement (15) et la butée (14).

14. Procédé selon la revendication (13), caractérisé en ce que la butée est espacée en partie au moins du tuyau principal (16) et le matériau moulable est moulé pour pénétrer et occuper complètement l'intervalle ainsi formé entre le tuyau principal (16) et la butée (14).

EP  0 187 010  B1

*Fig.1.*  15  11  9

20  14

16  19  18

13  10

12  17  10

*Fig.4.*  12  10

11  17

*Fig.2.*  12

13

14

11

9  10

*Fig.3.*  12

13

14

9

10

9  11

1